# EUROPÄISCHE PATENTSCHRIFT

(11) **EP 2 308 937 B1**
(45) Veröffentlichungstag und Bekanntmachung des Hinweises auf die Patenterteilung: **24.04.2013**
(21) Anmeldenummer: 10178272.0
(22) Anmeldetag: 22.09.2010
(51) Int. Cl.: C09J 7/02, B32B 7/12, B32B 27/08, B32B 27/36

(54) **Haftklebeband mit flexiblem Laminatträger**
Adhesive tape with flexible laminate carrier
Bande adhésive avec ruban laminé flexible

(30) Priorität: 06.10.2009 DE 102009045395
(43) Veröffentlichungstag der Anmeldung: 13.04.2011
(73) Patentinhaber: tesa SE, 20253 Hamburg (DE)
(72) Erfinder: Dalmis, Gabriel, 22459 Hamburg (DE); Husemann, Marc, 22559 Hamburg (DE)

(56) Entgegenhaltungen:
- EP-A2- 1 095 994
- WO-A1-2009/066435
- DE-A1-102004 062 770

## Beschreibung

Die Erfindung betrifft ein doppelseitiges Haftklebeband mit flexiblem Trägermaterial.

Doppelseitige Haftklebebänder werden heute in einer Vielzahl von Anwendungen eingesetzt. Auch existieren eine Vielzahl von Anwendungen, die hohe Klebkräfte sowie hohe Schichtdicken, etwa beispielsweise von größer 200 µm, erfordern. In der Regel werden für solche Anwendungen Haftklebebänder mit einem Schaumträger eingesetzt. Mit diesen Trägermaterialien lassen sich leicht hohe Schichtdicken realisieren. Die Schaumträger weisen aber auch Nachteile auf. So sind die Schäume durch Ihren Luftanteil komprimierbar, was im Endeffekt einer Schichtdickenveränderung gleich kommt. Solche Schichtdickenveränderungen werden aber für viele Anwendungen nicht toleriert. Des Weiteren weisen Schaumträger noch den Nachteil auf, dass die Stanzbarkeit dieser Haftklebebänder limitiert ist. Dies ist wiederum ein Resultat der Weichheit der Schäume.

Eine weitere Möglichkeit doppelseitige Haftklebebänder mit hoher Schichtdicke herzustellen besteht in der Beschichtung von Folienträgern mit hohem Klebmassenauftrag auf beiden Seiten. Dieses Konzept führt zu doppelseitigen Klebebändern mit hohem Performance Niveau, besitzt aber auch Nachteile. So wird auch hier die Stanzbarkeit erschwert, da Haftklebmassen in hohen Schichtdicken einen hohen Fluss aufweisen, und somit Stanzlinge nach dem Stanzprozess wieder leicht verkleben. Des Weiteren lassen sich solche Haftklebebänder nur schwer herstellen, da in vielen Fällen die Haftklebmasse aus Lösung auf den Träger aufgetragen wird. Bei sehr hohen Masseaufträgen kann aber nur noch sehr langsam beschichtet werden, da eine große Menge Lösungsmittel abgeführt werden muss. Dies muss schonend erfolgen, da ansonsten Blasen entstehen oder die Haftklebmasse nicht richtig getrocknet wird.

Ein weiteres Konzept besteht in der Verwendung von dicken Folienträgermaterialien für die doppelseitigen Haftklebebänder. Diese Haftklebebänder weisen ein gutes

Stanzverhalten auf, besitzen aber nur eine geringe Flexibilität durch den dicken Träger. Dies führt zu einer hohen Repulsionskraft bei der Verklebung von gebogenen Oberflächen.

Die bestehenden Konzepte weisen also diverse Nachteile auf. Es besteht daher der Bedarf für dicke doppelseitige Haftklebebänder, welche eine hohe Flexibilität aufweisen, ein gutes Stanzverhalten besitzen und nicht komprimierbar sind.

Es konnte erfindungsgemäß gefunden werden, dass die Biegesteifigkeit von Klebebändern günstig beeinflusst werden kann, wenn in doppelseitigen Klebebändern mit zumindest einem Folienträger von mindestens 0,1 mm Dicke (100 µm ± 10 µm) dieser Folienträger durch ein Laminat aus mindestens zwei Folienträgern ersetzt wird, insbesondere ein Laminat aus Folienträgern desselben Materials wie der ersetzte Folienträger, wobei das Laminat im wesentlichen dieselbe Schichtdicke besitzt wie der ersetzte Folienträger (im wesentlichen bedeutet im Rahmen der Herstellgenauigkeit von etwa 10 %).

Dementsprechend betrifft der Anspruch 1 ein Klebeband (insbesondere Haftklebeband) umfassend mindestens eine Schicht einer Klebmasse (im folgenden als "erste äußere Klebmassenschicht" bezeichnet, die entsprechende Klebmasse wird im folgenden als "erste äußere Klebmasse" bezeichnet) sowie eine Trägerschicht, wobei die Trägerschicht mindestens eine Dicke von 0,1 mm aufweist, dadurch gekennzeichnet, dass die Trägerschicht ihrerseits als ein Laminat aus zumindest zwei Folienschichten aufgebaut ist, die mit einer oder mehreren Klebmassenschichten (zur Unterscheidung von den äußeren Klebmassenschichten im folgenden als Laminatklebmassenschichten bezeichnet; die entsprechende Klebmassen wird im folgenden als "Laminatklebmassen" bezeichnet) miteinander verbunden sind, wobei die Folienschichten aus demselben Folienmaterial bestehen.

Die Unteransprüche betreffen bevorzugte Weiterentwicklungen der Klebmassen und des Trägermaterials.

Die erste äußere Klebmassenschicht kann mittelbar oder insbesondere unmittelbar an die Trägerschicht angrenzen.

Vorteilhaft handelt es sich um ein doppelseitiges Klebeband. Bevorzugt ist daher auch auf der anderen Seite der Trägerschicht mittelbar oder insbesondere unmittelbar eine Schicht einer Klebmasse (im Weiteren als zweite äußere Klebmassenschicht bezeichnet) vorgesehen, so dass das Klebeband bevorzugt auf beiden Seiten der Trägerschicht mit äußeren Klebmassenschichten ausgerüstet ist.

Sehr vorteilhaft handelt es sich bei der ersten äußeren Klebmassenschicht und/oder bei der zweiten äußeren Klebmassenschicht um Haftklebmassenschichten. In einer weiteren vorteilhaften Ausführungsform der Erfindung handelt es sich bei der ersten äußeren Klebmassenschicht und/oder bei der zweiten äußeren Klebmassenschicht um hitzeaktivierbare Klebmassen, also insbesondere um solche Klebmassen, die bei Raumtemperatur nicht oder nur sehr gering haftklebrig sind und zur Erzeugung einer für eine Anwendung hinreichenden Klebkraft einer thermischen Aktivierung bedürfen.

Als Laminatklebmassen lassen sich - insbesondere wenn als äußere Klebmassen Haftklebmassen verwendet werden - dieselben Klebmassen verwenden wie zur Erzeugung der äußeren Klebmassenschichten.

Vorteilhaft werden die Laminatklebmassenschicht bzw. die Laminatklebmassenschichten und die äußere Klebmassenschicht bzw. die äußeren Klebmassenschichten jedoch unabhängig voneinander gewählt; insbesondere für ihre jeweilige Funktion optimiert eingesetzt. So werden insbesondere im Sinne der Laminatklebmassen besonders scherfeste Klebmassen eingesetzt.

### Haftklebmassen

Als Haftklebmassensysteme können insbesondere als äußere Klebmassen Acrylat-, Naturkautschuk-, Synthesekautschuk-, Silikon- oder EVA-Kleber eingesetzt werden, insbesondere von Vorteil sind aus dieser Gruppe die Acrylathaftklebmassen. Grundsätzlich lassen sich auch die weiteren, dem Fachmann bekannten Haftklebmassen einsetzen.

Werden Naturkautschukklebmassen eingesetzt, so wird der Naturkautschuk bevorzugt bis zu einem Molekulargewicht (Gewichtsmittel) nicht unter etwa 100.000 Dalton, bevorzugt nicht unter 500.000 Dalton gemahlen und additiviert.

Bei Kautschuk/Synthesekautschuk als Ausgangsmaterial für die Klebmasse(n) sind weite Variationsmöglichkeiten gegeben, sei er aus der Gruppe der Naturkautschuke oder der Synthesekautschuke oder sei er aus einem beliebigen Blend aus Naturkautschuken und/oder Synthesekautschuken, wobei der Naturkautschuk oder die Naturkautschuke grundsätzlich aus allen erhältlichen Qualitäten wie zum Beispiel Crepe-, RSS-, ADS-, TSR- oder CV-Typen, je nach benötigtem Reinheits- und Viskositätsniveau, und der Synthesekautschuk oder die Synthesekautschuke aus der Gruppe der statistisch copolymerisierten Styrol-Butadien-Kautschuke (SBR), der Butadien-Kautschuke (BR), der synthetischen Polyisoprene (IR), der Butyl-Kautschuke (IIR), der halogenierten Butyl-Kautschuke (XIIR), der Acrylatkautschuke (ACM), der Etylen-Vinylacetat-Copolymeren (EVA) und der Polyurethane und/oder deren Blends gewählt werden können.

Weiterhin vorzugsweise können Kautschuken zur Verbesserung der Verarbeitbarkeit thermoplastische Elastomere mit einem Gewichtsanteil von 10 bis 50 Gew.-% zugesetzt werden, und zwar bezogen auf den Gesamtelastomeranteil. Stellvertretend genannt seien an dieser Stelle vor allem die besonders verträglichen Styrol-Isopren-Styrol- (SIS) und Styrol-Butadien-Styrol (SBS) -Typen.

Besonders bevorzugt werden (Meth)Acrylathaftklebmassen als erste äußere Klebmasse, als zweite äußere Klebmasse und/oder als Laminatklebmasse(n) eingesetzt.

Bevorzugt verwendete (Meth)Acrylathaftklebmassen können durch radikalische Polymerisation erhalten werden und bestehen zu mindestens 50 Gew.-% auf einem oder mehreren Monomeren aus der Gruppe der Verbindungen der folgenden allgemeinen Formel:

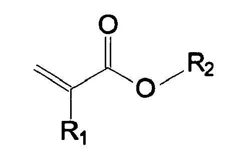

Dabei ist der Rest R₁ = H oder CH₃ ; der Rest R₂ = H oder CH₃ oder wird - unabhängig von den Resten der weiteren Monomere - gewählt aus der Gruppe der verzweigten oder unverzweigten, gesättigten, unsubstituierten oder substituierten Kohlenwasserstoffgruppen mit 1 bis 30 Kohlenstoffatomen.

Die Monomere werden bevorzugt dermaßen gewählt, dass die resultierenden Polymere bei Raumtemperatur oder höheren Temperaturen als Haftklebmassen eingesetzt werden können. Haftklebmassen (PSA; englisch: "pressure sensitive adhesives") sind insbesondere solche polymeren Massen, die - gegebenenfalls durch geeignete Additivierung mit weiteren Komponenten, wie beispielsweise Klebharzen - bei der Anwendungstemperatur (sofern nicht anders definiert, bei Raumtemperatur) dauerhaft klebrig und permanent klebfähig sind und an einer Vielzahl von Oberflächen bei Kontakt anhaften, insbesondere sofort anhaften (einen sogenannten "Tack" [Klebrigkeit oder Anfassklebrigkeit] aufweisen). Sie sind in der Lage, bereits bei der Anwendungstemperatur ohne eine Aktivierung durch Lösemittel oder durch Wärme - üblicherweise aber durch den Einfluss eines mehr oder weniger hohen Druckes - ein zu verklebenden Substrat hinreichend zu benetzen, damit sich zwischen der Masse und dem Substrat für die Haftung hinreichende Wechselwirkungen ausbilden können. Hierfür wesentliche Einflussparameter sind unter anderem der Druck sowie die Kontaktzeit. Die besonderen Eigenschaften der Haftklebmassen gehen unter anderem insbesondere auf deren viskoelastische Eigenschaften zurück.

Die Monomerzusammensetzung kann für eine oder mehrere der Klebmassenschichten auch derart gewählt werden, dass sich die Haftklebmassen als Hitze-aktivierbare Haftklebmassen einsetzen lassen, also erst bei Aktivierung durch thermische Energie eine hinreichende Klebrigkeit entwickeln.

Die Molmassen M_{w} [Bezug: Gelpermeationschromatographie: Messung an 100 µl klarfiltrierter Probe (Probenkonzentration 4 g/l); Eluent: Tetrahydrofuran mit 0,1 Vol.-% Trifluoressigsäure; Messtemperatur: 25 °C; Vorsäule: Typ PSS-SDV, 5 p, 10³ Å, ID 8,0 mm50 mm; Auftrennung: Säulen des Typs PSS-SDV, 5 p, 10³ Å sowie 10⁵ Å und 10⁶ Å mit jeweils ID 8,0 mm x 300 mm; Detektion: Differentialrefraktometer Shodex R171; Durchflussmenge: 1,0 ml pro Minute; Kalibrierung: PMMA-Standards (Polymethylmethacrylat-Kalibrierung)] der eingesetzten Polyacrylate betragen bevorzugt M_{w} ≥ 200.000 g/mol, besonders bevorzugt M_{w} ≥ 600.000 g/mol.

In einer sehr bevorzugten Weise werden Acryl- oder Methacrylmomonere eingesetzt, die aus Acryl- und Methacrylsäureestern mit Alkylgruppen aus 4 bis 14 C-Atomen herstellbar sind, wobei diese Reste bevorzugt 4 bis 9 C-Atomen umfassen. Spezifische Beispiele für deratige Monomere, ohne sich durch diese Aufzählung einschränken zu wollen, sind Methlacrylat, Methylmethacrylat, Ethylacrylat, n-Butylacrylat, n-Butylmethacrylat, n-Pentylacrylat, n-Hexylacrylat, n-Heptylacrylat, n-Octylacrylat, n-Octylmethacrylat, n-Nonylacrylat, Laurylacrylat, Stearylacrylat, Behenylacrylat, und deren verzweigten Isomere, wie z.B. Isobutylacrylat, 2-Ethylhexylacrylat, 2-Ethylhexylmethacrylat, Isooctylacrylat, Isooctylmethacrylat.

Weitere vorteilhaft einsetzbare Monomere sind monofunktionelle Acrylate bzw. Methacrylate von überbrückten Cycloalkylalkoholen, bestehend aus zumindestens 6 C-Atomen. Die Cycloalkylalkohole können auch substituiert sein, z.B. durch C-1-6-Alkylgruppen, Halogenatomen oder Cyanogruppen. Spezifische Beispiele sind Cyclohexylmethacrylate, Isobornylacrylat, Isobornylmethacrylate und 3,5-Dimethyladamantylacrylat.

In einer vorteilhaften Vorgehensweise werden Monomere eingesetzt, die polare Gruppen wie Carboxylreste, Sulfon- und Phosphonsäure, Hydroxyreste, Lactam und Lacton, N-substituiertes Amid, N-substituiertes Amin, Carbamat-, Epoxy-, Thiol-, Alkoxy-. Cyanreste, Ether oder ähnliches tragen.

Geeignete, moderate basische Monomere sind weiterhin z.B. N,N-Dialkylsubstituierte Amide, wie z.B. N,N-Dimethylacrylamid, N,N-Dimethylmethylmethacrylamid, N-tert.-Butylacrylamid, N-Vinylpyrrolidon, N-Vinyllactam, Dimethylaminoethylmethacrylat, Dimethylaminoethylacrylat, Diethylaminoethylmethacrylat, Diethylaminoethylacrylat, N-Methylolmethacrylamid, N-(Buthoxymethyl)methacrylamid, N-Methylolacrylamid, N-(Ethoxymethyl)acrylamid, N-Isopropylacrylamid.

Weitere bevorzugte Beispiele sind Hydroxyethylacrylat, Hydroxypropylacrylat, Hydroxyethylmethacrylat, Hydroxypropylmethacrylat, Allylalkohol, Maleinsäureanhydrid, Itaconsäureanhydrid, Itaconsäure, Glyceridylmethacrylat, Phenoxyethylacrlylat, Phenoxyethylmethacrylat, 2-Butoxyethylmethacrylat, 2-Butoxyethylacrylat, Cyanoethylmethacrylat, Cyanoethylacrylat, Glycerylmethacrylat, 6-Hydroxyhexylmethacrylat, Vinylessigsäure, Tetrahydrofufurylacrlyat, β -Acryloyloxypropionsäure, Trichloracrylsäure, Fumarsäure, Crotonsäure, Aconitsäure, Dimethylacrylsäure.

In einer weiteren sehr bevorzugten Vorgehensweise werden als Monomere Vinylester, Vinylether, Vinylhalogenide, Vinylidenhalogenide, Vinylverbindungen mit aromatischen Cyclen und Heterocyclen in α-Stellung eingesetzt. Auch hier seien nicht ausschließlich einige Beispiele genannt: Vinylacetat, Vinylformamid, Vinylpyridin, Ethylvinylether, Vinylchlorid, Vinylidenchlorid und Acrylonitril.

Weiterhin werden in einer weiteren Vorgehensweise Photoinitiatoren mit einer copolymerisierbaren Doppelbindung eingesetzt. Als Photoinitiatoren sind Norrish-l- und -II-Photoinitiatoren geeignet. Beispiele sind z.B. Benzoinacrylat und ein acryliertes Benzophenon der Fa. UCB (Ebecryl P 36®). Im Prinzip können alle dem Fachmann bekannten Photoinitiatoren copolymerisiert werden, die das Polymer über einen Radikalmechnismus unter UV-Bestrahlung vernetzen können. Ein Überblick über mögliche einsetzbare Photoinitiatoren die mit einer Doppelbindung funktionalisiert werden können, wird in Fouassier: "Photoinititation, Photopolymerization and Photocuring: Fundamentals and Applications", Hanser-Verlag, München 1995, gegeben. Ergänzend wird Carroy et al. in "Chemistry and Technology of UV and EB Formulation for Coatings, Inks and Paints", Oldring (Hrsg.), 1994, SITA, London eingesetzt.

In einer weiteren bevorzugten Vorgehensweise werden zu den beschriebenen Comonomeren Monomere hinzugesetzt, die eine hohe statische Glasübergangstemperatur besitzen. Als Komponenten eigenen sich aromatische Vinylverbindungen, wie z.B. Styrol, wobei bevorzugt die aromatischen Kerne aus C₄- bis C₁₈-Bausteinen bestehen und auch Heteroatome enthalten können. Besonders bevorzugte Beispiele sind 4-Vinylpyridin, N-Vinylphthalimid, Methylstyrol, 3,4-Dimethoxystyrol, 4-Vinylbenzoesäure, Benzylacrylat, Benzylmethacrylat, Phenylacrylat, Phenylmethacrylat, t-Butylphenylacrylat, t-Butylphenylmethacrylat, 4-Biphenylacrylat und -methacrylat, 2-Naphthylacrylat und -methacrylat sowie Mischungen aus denjenigen Monomeren, wobei diese Aufzählung nicht abschließend ist.

Zur Weiterentwicklung können den Haftklebmassen Harze beigemischt sein. Als zuzusetzende klebrigmachende Harze sind ausnahmslos alle vorbekannten und in der Literatur beschriebenen Klebharze einsetzbar. Genannt seien stellvertretend die Pinen-, Inden- und Kolophoniumharze, deren disproportionierte, hydrierte, polymerisierte, veresterte Derivate und Salze, die aliphatischen und aromatischen Kohlenwasserstoffharze, Terpenharze und Terpenphenolharze sowie C5-, C9- sowie andere Kohlenwasserstoffharze. Beliebige Kombinationen dieser und weiterer Harze können eingesetzt werden, um die Eigenschaften der resultierenden Klebmasse wunschgemäß einzustellen. Im allgemeinen lassen sich alle mit dem entsprechenden Polyacrylat kompatiblen (löslichen) Harze einsetzen, insbesondere sei verwiesen auf alle aliphatischen, aromatischen, alkylaromatischen Kohlenwasserstoffharze, Kohlenwasserstoffharze auf Basis reiner Monomere, hydrierte Kohlenwasserstoffharze, funktionelle Kohlenwasserstoffharze sowie Naturharze.

Weiterhin können optional Phosphat-Weichmacher (Plastifizierungsmittel), nicht brennbare Füllstoffe, Mikrokugeln aus anderen Materialien, Kieselsäure, Silikate), Keimbildner, Blähmittel, Compoundierungsmittel und/oder Alterungsschutzmittel, z.B. in Form von primären und sekundären Antioxidantien oder in Form von Lichtschutzmitteln zugesetzt sein. In einer bevorzugten Auslegung werden Oligophosphate als Weichmacher hinzugesetzt.

Zusätzlich können Vernetzer und Promotoren zur Vernetzung beigemischt werden. Geeignete Vernetzer für die Elektronenstrahlvernetzung und UV-Vernetzung sind beispielsweise bi- oder multifunktionelle Acrylate, bi- oder multifunktionelle Isocyanate (auch in blockierter Form) oder bi- oder multifunktionelle Epoxide.

Zu einer optionalen Vernetzung mit UV-Licht können den Polyacrylathaftklebmassen UVabsorbierende Photoinitiatoren zugesetzt werden. Nützliche Photoinitiatoren, welche sehr gut zu verwenden sind, sind Benzoinether, wie z. B. Benzoinmethylether und Benzoinisopropylether, substituierte Acetophenone, wie z. B. 2,2-Diethoxyacetophenon (erhältlich als Irgacure 651® von Fa. Ciba Geigy®), 2,2-Dimethoxy-2-phenyl-1-phenylethanon, Dimethoxyhydroxyacetophenon, substituierte α-Ketole, wie z. B. 2-Methoxy-2-hydroxypropiophenon, aromatische Sulfonylchloride, wie z. B. 2-Naphthyl sulfonylchlorid, und photoaktive Oxime, wie z. B. 1-Phenyl-1,2-propandion-2-(O-ethoxycarbonyl)oxim.

Die oben erwähnten und weitere einsetzbare Photoinititatioren und andere vom Typ Norrish I oder Norrish IIkönnen folgenden Reste enthalten: Benzophenon-, Acetophenon-, Benzil-, Benzoin-, Hydroxyalkylphenon-, Phenylcyclohexylketon-, Anthrachinon-, Trimethylbenzoylphosphinoxid-, Methylthiophenylmorpholinketon-, Aminoketon-, Azobenzoin-, Thioxanthon-, Hexarylbisimidazol-, Triazin-, oder Fluorenon, wobei jeder dieser Reste zusätzlich mit einem oder mehreren Halogenatomen und/oder einer oder mehreren Alkyloxygruppen und/oder einer oder mehreren Aminogruppen oder Hydroxygruppen substituiert sein kann. Ein repräsentativer Überblick wird von Fouassier: "Photoinititation, Photopolymerization and Photocuring: Fundamentals and Applications", Hanser-Verlag, München 1995, gegeben. Ergänzend kann Carroy et al. in "Chemistry and Technology of UV and EB Formulation for Coatings, Inks and Paints", Oldring (Hrsg.), 1994, SITA, London herangezogen werden.

### Herstellverfahren für die Haftklebmassen

Zur Herstellung der Poly(meth)acrylathaftklebmassen werden vorteilhaft konventionelle radikalische Polymerisationen mit den Monomeren durchgeführt. Für die radikalisch verlaufenden Polymerisationen werden bevorzugt Initiatorsysteme eingesetzt, die zusätzlich weitere radikalische Initiatoren zur Polymerisation enthalten, insbesondere thermisch zerfallende radikalbildende Azo- oder Peroxo-Initiatoren. Prinzipiell eignen sich jedoch alle für Acrylate dem Fachmann geläufigen, üblichen Initiatoren. Die Produktion von C-zentrierten Radikalen ist im Houben Weyl, Methoden der Organischen Chemie, Vol. E 19a, S. 60-147 beschrieben. Diese Methoden werden in bevorzugter Weise in Analogie angewendet.

Beispiele für Radikalquellen sind Peroxide, Hydroperoxide und Azoverbindungen, als einige nicht ausschließliche Beispiele für typische Radikalinitiatoren seien hier genannt Kaliumperoxodisulfat, Dibenzoylperoxid, Cumolhydroperoxid, Cyclohexanonperoxid, Di-t-butylperoxid, Azodiisosäurebutyronitril, Cyclohexylsulfonylacetylperoxid, Diisopropylpercarbonat, t-Butylperoktoat, Benzpinacol. In einer sehr bevorzugten Auslegung wird als radikalischer Initiator 1,1'-Azo-bis-(cyclohexancarbonsäurenitril) (Vazo 88™ der Fa. DuPont) oder Azodisobutyronitril (AIBN) verwendet.

Die Polymerisation kann in Substanz, in Gegenwart eines oder mehrerer organischer Lösungsmittel, in Gegenwart von Wasser oder in Gemischen aus organischen Lösungsmitteln und Wasser durchgeführt werden. Es wird dabei angestrebt, die verwendete Lösungsmittelmenge so gering wie möglich zu halten. Geeignete organische Lösungsmittel sind reine Alkane (z.B. Hexan, Heptan, Octan, Isooctan), aromatische Kohlenwasserstoffe (z.B. Benzol, Toluol, Xylol), Ester (z.B. Essigsäureethylester, Essigsäurepropyl-, -butyl- oder -hexylester), halogenierte Kohlenwasserstoffe (z.B. Chlorbenzol), Alkanole (z.B. Methanol, Ethanol, Ethylenglycol, Ethylenglycolmonomethylether) und Ether (z.B. Diethylether, Dibutylether) oder Gemische davon. Die wäßrigen Polymerisationsreaktionen können mit einem mit Wasser mischbaren oder hydrophilen Colösungsmittel versetzt werden, um zu gewährleisten, daß das Reaktionsgemisch während des Monomerumsatzes in Form einer homogenen Phase vorliegt. Vorteilhaft verwendbare Colösungsmittel für die vorliegende Erfindung werden gewählt aus der folgenden Gruppe, bestehend aus aliphatischen Alkoholen, Glycolen, Ethern, Glycolethern, Pyrrolidinen, N-Alkylpyrrolidinonen, N-Alkylpyrrolidonen, Polyethylenglycolen, Polypropylenglycolen, Amiden, Carbonsäuren und Salzen davon, Estern, Organosulfiden, Sulfoxiden, Sulfonen, Alkoholderivaten, Hydroxyetherderivaten, Aminoalkoholen, Ketonen und dergleichen, sowie Derivaten und Gemischen davon.

Die Polymerisationszeit beträgt - je nach Umsatz und Temperatur - zwischen 2 und 72 Stunden. Je höher die Reaktionstemperatur gewählt werden kann, das heißt, je höher die thermische Stabilität des Reaktionsgemisches ist, desto geringer kann die Reaktionsdauer gewählt werden.

Zur Initiierung der Polymerisation ist für die thermisch zerfallenden Initiatoren der Eintrag von Wärme essentiell. Die Polymerisation kann für die thermisch zerfallenden Initiatoren durch Erwärmen auf 50 bis 160 °C, je nach Initiatortyp, initiiert werden.

Für die Herstellung kann es auch von Vorteil sein, die Acrylathaftklebmassen in Substanz zu polymerisieren. Hier eignet sich insbesondere die Präpolymerisationstechnik einzusetzen. Die Polymerisation wird mit UV-Licht iniitiert, aber nur zu einem geringen Umsatz ca. 10 bis 30 % geführt. Anschließend kann dieser Polymersirup z.B. in Folien eingeschweisst werden (im einfachsten Fall Eiswürfel) und dann in Wasser zu hohem Umsatz durchpolymerisiert werden. Diese Pellets lassen sich dann als Acrylatschmelzkleber einsetzen, wobei für den Aufschmelzvorgang besonders bevorzugt Folienmaterialien eingesetzt werden, die mit dem Polyacrylat kompatibel sind. Auch für diese Präparationsmethode lassen sich die thermisch-leitfähigen Materialzusätze vor oder nach der Polymerisation zusetzen.

In weiteren Auslegungsvarianten der Erfindung werden zur Herstellung der erfindungsgemäßen Haftklebmassen kontrollierte radikalische oder lebende Polymerisationsprozesse eingesetzt.

Ein anderes vorteilhaftes Herstellungsverfahren für die Poly(meth)acrylathaftklebmassen ist die anionische Polymerisation. Hier werden als Reaktionsmedium bevorzugt inerte Lösungsmittel verwendet, wie z.B. aliphatische und cycloaliphatische Kohlenwasserstoffe, oder auch aromatische Kohlenwasserstoffe.

### Trägerschichten

Erfindungsgemäß wurde festgestellt, dass insbesondere einschichtige Träger von 0,1 mm Dicke hervorragend zur Verringerung der Biegesteifigkeit durch Folienlaminate einer im Wesentlichen gleichen Dicke ersetzt werden können, während dieser Effekt für deutlich dünnere einschichtige Träger nicht signifikant auftritt.

Das Folienlaminat wird insbesondere derart gewählt, dass es eine geringere Biegesteifigkeit aufweist als eine gleich dimensionierte einschichtige Folienschicht (eine Folienschicht gleicher Ausmaße und Dicke wie das Laminat) aus einem Material, aus dem zumindest eine der Folien des Laminats besteht.

Die Biegesteifigkeit ist dabei eine solche, die als "breitenbezogene Biegesteifigkeit S" gemäß DIN 53121:2008-10; Nr. 5.1. Zweipunkt-Verfahren gemessen werden kann mit der Maßgabe, dass statt Papier, Karton oder Pappe das Folienlaminat bzw. die Vergleichs-Folienschicht vermessen wird.

Alle Folienschichten des Laminats bestehen aus (zwei oder mehreren; je nach Laminataufbau) aus demselben Folienmaterial.

Beide Folien in Dreischichtlaminaten aus zwei Folien und einer Laminierklebmassenschicht - in Laminaten höherer Schichtenabfolge alle Folien - bestehen aus demselben Folienmaterial. Dabei wird das Laminat derart gewählt, dass alle Folienschichten aus demselben Folienmaterial bestehen und das Folienlaminat der Trägerschicht eine geringere Biegesteifigkeit aufweist als eine gleich dimensionierte Folienschicht, die aus demselben Folienmaterial wie die Folienschichten des Laminats besteht (breitenbezogene Biegesteifigkeit S nach DIN 53121:2008-10; Nr. 5.1. Zweipunkt-Verfahren; mit der Maßgabe, dass statt Papier, Karton oder Pappe das Folienlaminat bzw. eine wie vorstehend beschriebene Folienschicht entsprechend vermessen wird).

Als Trägermaterialien werden Folienlaminate eingesetzt, deren Gesamtdicke mindestens 0,1 mm beträgt. Die Dicke der Klebmassenschicht zur Laminierung der Trägerfolien kann dabei so gering wie möglich gewählt werden und ist daher für die Angabe der Mindestschichtdicke des Trägerfolienlaminats vernachlässigbar. Für gute Laminate ist eine Laminatkleberschicht von mindestens 2 µm (entsprechend einem Flächengewicht von circa 2 g/m²), besser von mindestens 3 µm (entsprechend einem Flächengewicht von circa 3 g/m²) vorteilhaft, wobei die Laminatkleberschicht auch deutlich dicker ausgestaltet werden kann. So kann die Laminatkleberschicht auch 10 µm (entsprechend circa 10 g/m²) oder mehr, 50 µm (entsprechend circa 50 g/m²) oder mehr oder auch 100 µm (entsprechend circa 100 g/m²) oder mehr betragen. Durch Einsatz einer dicken Laminatklebmassenschicht kann bei gleich bleibender Trägerdickenschicht die Dicke der Folie weiter reduziert werden und hierdurch eine weitere Justierung der Biegesteifigkeit auf gewünschte Werte erfolgen (Feinabstimmung zwischen erforderlicher Festigkeit und gewünschtem Biegevermögen).

Die oben vorteilhaft genannten Laminatschichtdicken entsprechen dann Trägerschichtdicken von 102 µm ± 10 µm beziehungsweise 103 µm ± 10 µm.

Ein Fehler von etwa 10 % ergibt sich durch die Genauigkeit handelsüblicher Folien in Verbindung mit produktionsbedingten Schwankungen, wie Herstell-, Beschichtungs- und Trocknungseffekte. Sofern zu Schichtdicken und Klebebanddicken im Rahmen dieser Schrift Angaben gemacht werden, sei daher jeweils eine Genauigkeit von ± 10 % angenommen.

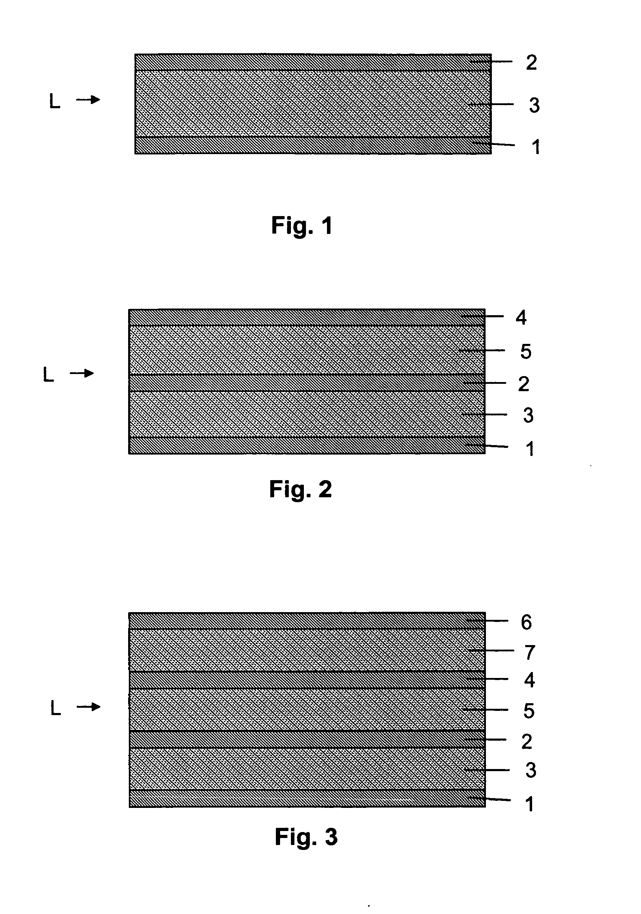

Die Folienlaminate (L) umfassen zumindest einen Aufbau gemäß der schematischen Darstellung in Figur 1, nämlich eine Schichtenabfolge zwei Folienschichten (1, 2), die mittels einer Laminatklebmassenschicht (3) miteinander verbunden sind.

Dabei bestehen die Folienträger (1, 2) aus demselben Folienmaterial.

Neben derartigen dreischichtigen Aufbau können aber auch Laminat-Aufbauten (L) mit mehr als drei Schichten eingesetzt werden, wie z.B. gemäß der schematischen Darstellung in Figur 2 mit drei Folienschichten (1, 2, 4) und zwei Klebstoffschichten (3, 5), gemäß der schematischen Darstellung in Figur 3 mit vier Folienschichten (1, 2, 4, 6) mit drei Klebstoffschichten (3, 5, 7) oder auch mit noch höherer Schichtenabfolge.

Die als Folienschicht eingesetzten Folien weisen bevorzugt Schichtdicken von 4 bis 100 µm, mehr bevorzugt Schichtdicken von 12 bis 50 µm auf.

Die Laminatklebmassenschichten können so dünn wie möglich gestaltet werden, sofern sie noch in der Lage sind, den Verbund der Folien untereinander zu gewährleisten, und können auch mit Dicken kleiner als 2 µm realisiert werden. Sie weisen aber unabhängig voneinander bevorzugt Schichtdicken von mindestens 2 µm, besser von mindestens 3 µm, insbesondere im Bereich von 10 µm bis 100 µm auf.

Die Gesamtdicke des Trägerlaminates beträgt bevorzugt mehr als 0,1 mm (100 µm ± 10 µm) und beträgt insbesondere bis zu 0,5 mm (500 µm ± 50 µm). So lassen sich etwa Einschichtträger von 150 µm, 200 µm, 250 µm, 350 µm, 400 µm oder 450 µm oder auch mehr hervorragend durch Trägerlaminate gleicher Dicke ersetzen und führen erfindungsgemäß zum Erfolg, wobei der vorteilhafte Effekt insbesondere für dicke Träger zu beobachten ist.

Die Folienträger basieren auf Polymeren, die zu Folien extrudiert oder gegossen werden können. Sie können unabhängig voneinander gewählt werden, insbesondere vorteilhaft sind aber solche Folienlaminate, bei denen zwei, mehrere oder insbesondere alle Träger aus demselben Material gewählt sind. Geeignete Folienmaterialien sind z.B. Polyester, Polymetharylate, Polycarbonate, Polyamide, Polyolefine, Polyvinylchloride, Polyurethane, Polyimide oder Nylon. In einer besonders bevorzugten Auslegung wird Polyethylenterephthalat (PET) eingesetzt.

Beispielhaft seien Folienlaminate genannt, bei denen die Folien aus demselben Folienmaterial eingesetzt werden, insbesondere Dreischichtlaminaten (Folienschicht - Laminatklebmassenschicht - Folienschicht, z.B. PET-Folie - Klebmasse, insbesondere Acrylatklebmasse - PET-Folie), aber auch Laminate mit vier und solche mit fünf Folienschichten.

Als Laminatklebstoff können zum einen konventionelle Haftklebmassen eingesetzt werden.

Als Laminatklebmassen können vorteilhaft Haftklebmassen derjenigen Zusammensetzung eingesetzt werden, wie sie vorne bereits insbesondere für die äußeren Klebmassen beschrieben wurden. Dabei werden bevorzugt Haftklebmassen mit einer hohen Kohäsion gewählt, insbesondere Haftklebmassen mit einer Scherstandzeit von mindestens 1000 min oder mehr, bevorzugt von mindestens 5000 min oder mehr (gemäß Test D und bezogen auf eine Massenschicht von 50 g/m²).

Als Laminatklebstoffe können auch Flüssigklebstoffe eingesetzt werden. Im Allgemeinen differenziert man zwischen Flüssigklebstoffen auf organischer, anorganischer oder Silikonbasis. Des Weiteren kann man auch nach dem Verfestigungsprinzip differenzieren. So existiert neben der bereits genannten Gruppe der Haftklebstoffe auch die Gruppe der chemisch härtenden Klebstoffe und der physikalisch abbindenden Klebstoffe.

In die Gruppe der chemisch härtenden Klebstoffe fallen z.B. die Cyanacrylatklebstoffe, die Methylmethacrylatklebstoffe, die anaerob härtenden Klebstoffe, die ungesättigten Polyester (UP-Harze), die strahlenhärtenden Klebstoffe, die Polykondensationsklebstoffe, wie z.B. Phenolformaldehyklebstoffe, Siliconklebstoffe, Silanvernetzende Polymerklebstoffe, Polyimidklebstoffe, oder die Polyadditionsklebstoffe, wie z.B. die Epoxidharzklebstoffe oder die Polyurethanklebstoffe. In der Gruppe der physikalisch abbindenden Klebstoffe seien die Schmelzklebstoffe, die Kontaktklebstoffe, die Dispersionsklebstoffe und die Plastisole genannt.

Weiterhin können sogenannte Kaschierklebmassen zur Herstellung der Folienlaminate eingesetzt werden. Hier wird bevorzugt auf eine Monomerenzusammensetzung, die 70 bis 100 Gew.-% Acrylsäure und/oder Methacrylsäure-Derivate der folgenden allgemeinen Formel enthält 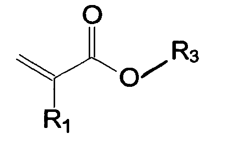 mit R₁ = H oder CH₃ und R₃ = eine Alkylkette mit 2-20 C-Atomen,

verwendet, wobei zunächst durch eine unter aktinischer Bestrahlung initiierte Polymerisation ein Präpolymerisat hergestellt wird, das als UV-härtbare Kaschierklebmasse verwendbar ist.

Für die Herstellung werden bevorzugt weitere olefinisch ungesättigte Monomere mit funktionellen Gruppen sowie 0,1-5 Gewichtsprozent eines Photoinitiators oder eines Gemisches aus mehreren Photoinitatoren eingesetzt, wobei die UV-Polymerisation beschleunigende Substanzen beigemischt werden können, verwendet.

Das Verfahren wird dann vorteilhaft so geführt, dass:
- die Polymerisation unter aktinischer Bestrahlung initiiert wird,
- nach Abbruch der Polymerisation das Präpolymerisat direkt als Kaschierkleber für das Folienlaminat eingesetzt wird oder nochmal zur Verdünnung mit Acrylatmonomeren oder olefinisch ungesättigten Monomeren abgemischt wird und
- nach der Kaschierverklebung mit UV-Licht das Laminat vollständig bis zu einem Umsatz größer 98,5 % durchgehärtet wird.

Weiterhin können vor der vollständigen UV-initiierten Polymerisation weitere Monomere der erfindungsgemäßen Monomerenzusammensetzung hinzugesetzt oder beigemischt werden.

In einer sehr bevorzugten Weise werden Acryl- oder Methacrylmomonere für die Kaschierklebmasse eingesetzt, die aus Acryl- und Methacrylsäureester mit Alkylgruppen aus 4 bis 14 C-Atomen hergestellt werden können, bevorzugt 4 bis 9 C-Atomen umfassen. Spezifische Beispiele, ohne sich durch diese Aufzählung einschränken zu wollen, sind Methlacrylat, Methylmethacrylat, Ethylacrylat, n-Butylacrylat, n-Butylmethacrylat, n-Pentylacrylat, n-Hexylacrylat, n-Heptylacrylat, n-Octylacrylat, n-Octylmethacrylat, n-Nonylacrylat, Laurylacrylat, Stearylacrylat, Behenylacrylat, und deren verzweigten Isomere, wie z.B. Isobutylacrylat, 2-Ethylhexylacrylat, 2-Ethylhexylmethacrylat, Isooctylacrylat, Isooctylmethacrylat.

Weitere einzusetzende Verbindungsklassen sind monofunktionelle Acrylate bzw. Methacrylate von überbrückten Cycloalkylalkoholen, bestehend aus zumindestens 6 C-Atomen. Die Cycloalkylalkohole können auch substituiert sein, z.B. durch C-1-6-Alkylgruppen, Halogenatomen oder Cyanogruppen. Spezifische Beispiele sind Cyclohexylmethacrylate, Isobornylacrylat, Isobornylmethacrylate und 3,5-Dimethyladamantylacrylat.

Die Monomere oder die Rohstoffe für die Flüssigklebstoffe werden bevorzugt dermaßen gewählt, dass die resultierenden Polymere oder vernetzen Polymere mindestens eine Glasübergangstemperatur (statische Glasübergangstemperatur mittels DSC-Messung; DIN 53765: 1994-03; dort Glasumwandlungstemperatur Tg) von kleiner 25 °C, bevorzugt kleiner 15 °C aufweisen, um die Flexibilität des Trägers zu erhalten.

Neben der chemischen Zusammensetzung der Klebstoffe hat auch die Verankerung auf den Trägerfolien einen Einfluss auf den verbund.

So wird die Trägerfolie in einer bevorzugten Vorgehensweise vor der Herstellung des Folienträgerlaminates physikalisch und/oder chemisch vorbehandelt, um die Verankerung mit dem Klebstoff zu verbessern. So eignen sich z.B. Corona und Plasma-Vorbehandlungen, Flammbehandlungen oder das Ätzen. Des Weiteren können auch chemische Primer zur Verankerungsverbesserung eingesetzt werden. Um eine sehr gute Verankerung zu erreichen, können auch UV-Photoinitiatoren eingesetzt werden, die zunächst mit der Folie reagieren um dann z.B. durch Initiierung mit UV-Licht eine zweite Reaktion eingehen und mit dem Klebstoff zu vernetzen. Neben Strahlen-induzierten Vernetzung kann natürlich auch thermisch oder mit Feuchtigkeit vernetzt werden.

### Produktaufbauten

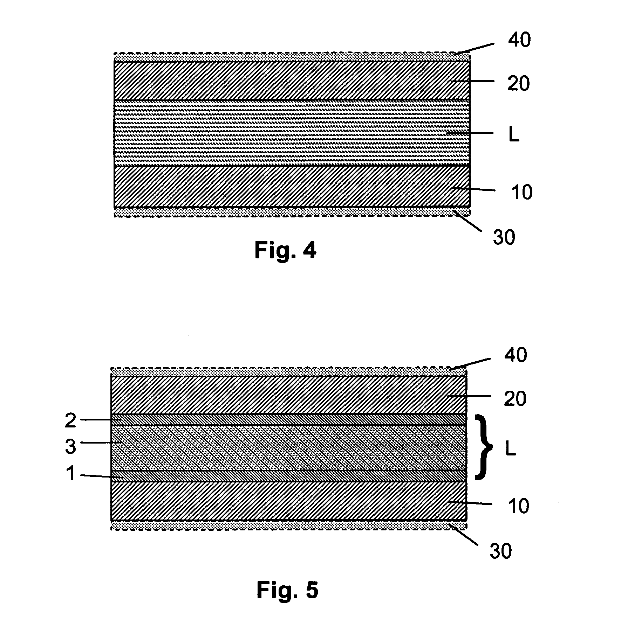

Das erfindungsgemäße Klebeband kann hervorragend entsprechend einem Aufbau gemäß der schematischen Darstellung in Figur 4 als doppelseitiges Haftklebeband aufgebaut sein, wobei als Trägermaterial ein Folienlaminat (L) eingesetzt wird. Beideseitig des Folienlaminates L sind die erste äußere Klebmassenschicht (10) sowie die zweite äußere Klebmassenschicht (20) vorgesehen. In der Figur 4 ist beispielhaft ein Dreischichtenaufbau aus den genannten Schichten (10, L, 20), wobei das doppelseitige Klebeband aber auch weitere, in der Figur nicht dargestellte Schichten umfassen kann.

Figur 5 zeigt ein derartiges Klebeband unter Verwendung eines dreischichtigen Folienlaminates gemäß Figur 1.

Zur Aufrollung zum Haftklebeband können die doppelseitigen Haftklebebänder optional einseitig oder beidseitig mit einem Trennmaterial (30, 40) ( auch als Releaseliner bezeichnet) eingedeckt sein, welches für die Anwendung des Klebebandes wieder entfernt wird.

Als Trennmaterialien eignen sich Glassine-, Niederdruck-Polyethylen-Liner [High density polyethylene- (HDPE-) Liner] oder Hochdruck-Polyethylen-Liner [Low density polyethylene- (LDPE-) Liner], die in einer bevorzugten Variante einen abgestuften Release besitzen. In einer sehr bevorzugten Vorgehensweise wird ein Folienreleaseliner eingesetzt. Der Folienreleaseliner kann in bevorzugter Weise eine Abstufung besitzen.

Des Weiteren können auch zwei Releaseliner zur Abdeckung eingesetzt werden (Doppelliner).

Die Dicke des Folienlaminates beträgt erfindungsgemäß mindestens 0,1 mm. Die äußeren Klebmassenschichten (erste und zweite äußere Klebmassenschicht) können den üblichen Klebmassenaufträgen für doppelseitige Klebebänder entsprechen und in unterschiedlicher Dicke, aber hervorragend auch in gleicher Dicke gewählt werden.

Die äußeren Klebmassenschichten, insbesondere Haftklebmassenschichten, können beispielsweise unabhängig voneinander jeweils in einer Dicke von 10 bis 150 µm (entsprechend einem Flächengewicht von circa 10 bis 150 g/m²), insbesondere von 30 bis 100 µm (entsprechend einem Flächengewicht von circa 30 bis 100 g/m²) realisiert werden. Sehr vorteilhaft ist es, wenn eine oder beide äußeren Klebmassenschichten eine Dicke von 50 µm (entsprechend einem Flächengewicht von circa 50 g/m²) aufweist bzw. aufweisen.

Die erfindungsgemäßen Klebebänder sind solche mit einer Dicke von bevorzugt mindestens 120 µm, sehr bevorzugt mindestens 200 µm, besonders bevorzugt mindestens 300 µm, äußerst bevorzugt 500 µm oder mehr. Die Klebebänder können sehr große Dicken besitzen, bevorzugt sind Klebebänder von bis zu 1 mm (1000 µm).

Gegenstand der Erfindung ist weiterhin die Verwendung der Haftklebeprodukte als doppelseitige Haftklebebänder, insbesondere bevorzugt im Bereich der Elektronikindustrie.

Beispiele für hervoragende Verwendungsmöglichkeiten des erfindungsgemäßen Klebebandes sind insbesondere solche Gebiete, in denen die Verklebungsstelle besonderen mechanischen Beanspruchungen ausgesetzt ist. Dies ist zum Beispiel der Fall bei tragbaren bzw. mitführbaren elektronischen Geräten, wie Laptops und Notebooks (tragbare Computer), Mobiltelefonen, PDAs und Organizern (Personal Digital Assitents; elektronische Organisationsgeräte), Navigationsgeräten, Funkgeräten und dergleichen, so dass die erfindunsgemäßen Klebebänder insbesondere zur Verklebung von Bauteilen in den vorgenannten und ähnlichen Geräten eingesetzt werden können. Auch aufgrund der Schockresorptionswirkung der Klebebänder sind sie für den genannten Einsatzzweck sehr geeignet.

Ein weiteres Einsatzgebiet ist die Verklebung in und/oder bei der Herstellung von Schaltern und Schalteinheiten, bei denen die Schaltfunktion über ein flexibles Substrat ("Membran") realisiert wird (sogenannte "membrane switches" oder "membrane touch switches"; Definition nach ASTM: zeitlich begrenzte Schaltung, in der mindestens ein Kontakt auf einem flexiblen Substrat liegt oder durch dieses bewirkt wird). Diese Schalteinheiten umfassen in der Regel eine flexible Leiterplatte, insbesondere beispielweise Polyethylenfolien (PET) mit aufgedruckten Schaltkreisen oder flexible Indiumzinnoxidgläser (ITO-Glas; mit einer ITO-Schicht oder ITO-Bahnen versehenem Glas), Indiumzinnoxidfolien (ITO-Folie; mit einer ITO-Schicht oder ITO-Bahnen versehener Folie) oder leitfähigen Polymerfolien.

Diese druckempfindlichen Schalt-Einheiten sind ebenfalls einer erheblichen mechanischen Beanspruchung ausgesetzt, da der Schaltkontakt regelmäßig durch Verformung der Membran (durch Aufdrücken) hergestellt wird. Auch hierbei darf sich die Verklebung durch bei der Verformung der Membran bzw. der Verklebungsstelle nicht durch eine zu hohe Steifigkeit der zur Verklebung verwendeten Klebebänder lösen.

Die erfindungsgemäßen Haftklebebänder lassen sich hervorragend zur Verklebung von Druckplatten für Druckverfahren verwenden, insbesondere zur Verklebung von flexiblen Druckplatten (auch als Klischees bezeichnet) auf Druckzylinder oder Druckhülsen, ganz besonders bevorzugt für das Flexodruckverfahren. Im Flexodruckverfahren werden Klischees auf Druckzylinder oder Druckhülsen verklebt, wobei die Klischees beispielsweise aus einer Polyethylenterephthalat-Folie (PET-Folie) bestehen, auf die eine Schicht eines Fotopolymers aufgebracht ist, in die durch Belichtung das entsprechende Druckrelief eingebracht werden kann. Die Verklebung des Klischees auf dem Druckzylinder bzw. der Druckhülse erfolgt dann über die PET- Folie.

Zur Verklebung werden in der Regel doppelseitige Haftklebebänder eingesetzt, an die sehr hohe Anforderungen gestellt werden. Für den Druckprozess muss das Haftklebeband eine bestimmte Härte, aber auch eine bestimmte Elastizität aufweisen, insbesondere damit das erzeugte Druckbild gemäß den Anforderungen das gewünschte Ergebnis liefert. Weiterhin soll sich die Druckplatte nicht von dem doppelseitigen Haftklebeband oder das Haftklebeband vom Zylinder bzw. der Hülse ablösen (hier ist insbesondere das Kantenabheben nachteilig).

Aufgrund der geringen Biegesteifigkeit der erfindungsgemäßen Haftklebebänder lassen sich diese hervorragend zur Verklebung von flexiblen Druckplatten (auch als Klischees bezeichnet) auf Druckzylinder oder Druckhülsen, also auf nicht-planare, gebogene Oberflächen einsetzen, da sie aufgrund verminderter Rückstellkräfte in die planare Ebene eine geringe Neigung zum Kantenabheben aufweisen.

### Experimenteller Teil

Die Erfindung wird im folgenden durch Experimente beschrieben, ohne sich durch die Wahl der untersuchten Proben unnötig beschränken zu wollen.

Folgende Testmethoden wurden angewendet.

### 180° Klebkrafttest (Test A)

Der Klebkrafttest wurde nach PSTC-1 durchgeführt. Es wurde die Klebkraft auf Stahle bestimmt. Die Stahlplatten wurden zweimal mit Aceton und einmal mit Isopropanol gewaschen. Die Messergebnisse sind in N/cm angegeben und sind gemittelt aus drei Messungen. Alle Messungen wurden bei Raumtemperatur unter klimatisierten Bedingungen durchgeführt.

### Biegesteifigkeit (Test B)

Die Messung der Biegesteifigkeit erfolgt nach der Balkenmethode im Zweipunktverfahren nach der DIN 53121. Die Probenbreite betrug 0.038 m. Die Messung wurde für alle Beispiele ohne Trennfolie durchgeführt. Es wurde die Maschine L&W Bending Tester Code 160 eingesetzt. Der Biegewinkel betrug 30°.

### Kugelfalltest (Test C)

Eine PMMA Platte mit 35 mm x 45 mm und 1 mm Dicke wird mit einem ABS Rahmen (Außenabmessung: 40 mm x 50 mm, Randbreite 8 mm, Dicke 3 mm) verklebt. Der Haftklebebandstanzling weist die Außendimensionen 46 mm x 36 mm mit einer Stegbreite von 2 mm auf. Die Verklebungsfläche berechnet sich daraus und beträgt 304 mm².

Die Verklebung wird mit einem Anpressdruck von 6 kg für 5 Sekunden vorgenommen. Der Falltest wird nach 24 h Verklebungszeit bei 23°C vorgenommen.

Die Edelstahlkugel weist einen Durchmesser von 15 mm und ein Gewicht von 13,7 g auf. Sie wird aus unterschiedlichen Höhen auf den Probekörper fallen gelassen, der in einem Rahmen fixiert ist. Es wird die Höhe bestimmt, bei der die Verklebung noch den Stoß auffangen kann und die Prüfkörper sich nicht trennen. Damit die Edelstahlkugel mittig die PMMA Platte trifft, wird der Fall durch ein Rohr mit einem Durchmesser von 20 mm arretiert. Es wird der Mittelwert aus 3 Messungen genommen. Die Fallhöhen werden in 10 cm Schritten variiert.

### Scherstandzeit (Test D):

Die Messung erfolgt in Anlehnung zur PSTC-7. Ein Klebeband wird unter definierten Bedingungen auf einen vorgegebenen, starren Haftgrund aufgebracht und einer konstanten Scherbelastung ausgesetzt. Ermittelt wird die Haltedauer in Minuten.

### Probenvorbereitung:

Die zu untersuchende Klebmasse wurde mit einem Flächengewicht von 50 g/m² auf ein Trennmaterial aufgebracht. Das Probenmuster wurde auf eine Aluminiumfolie zur Verstärkung umlaminiert und ein Probenmuster von 13 mm Breite und 30 mm Länge ausgeschnitten.

Das Probenmuster wurde dann mit der freien Klebmassenseite auf eine glatte, rechteckige Stahloberfläche, die zuvor dreimal mit Aceton und einmal mit Isopropanol gereinigt worden war, aufgebracht, und zwar derart, dass das Klebeband an einer der Kanten der Stahlplatte über die betreffende Kante hinausragt, wobei die Längsrichtung des Klebebandes senkrecht zu der betreffenden Stahlplattenkante ausgerichtet war und die Verklebungsfläche 20 mm - 13 mm (Länge - Breite) betrug (so dass das über die Stahlplattenkante hinausragende Ende des Klebebandes eine Länge von 10 mm hatte). Anschließend wurde das Klebeband viermal mit einem Anpressdruck entsprechend einem Gewicht von 2 kg auf den Stahlträger gedrückt. Die Stahlplatte wurde senkrecht aufgehängt, so dass das überstehende Ende des Klebebandes nach unten zeigt.

Bei Raumtemperatur wurde ein Gewicht von 1 kg an dem überstehenden Ende des Klebebandes befestigt und die Zeitmessung gestartet. Die Messung wird bei Normalklima (23 °C, 55 % Luftfeuchtigkeit) und bei 70 °C in einem Wärmeschrank durchgeführt.

Die gemessenen Scherstandzeiten [Zeiten bis zum Versagen der Verklebung und Abfallen des Musters; Abbruch der Messung bei 10.000 min] sind in Minuten angegeben, die hier angegebenen Werte entsprechen dem Mittelwert aus drei Messungen und beziehen sich auf eine Klebmassenschicht mit einem Flächengewicht von 50 g/m².

### Herstellung der Proben

### Polymer 1

Ein für radikalische Polymerisationen konventioneller 200 L-Reaktor wurde mit 3 kg Acrylsäure, 10 kg Methylacrylat, 35 kg 2-Ethylhexylacrylat, 35 kg Butylacrylat und 53,3 kg Aceton/Isopropanol (85:15) befüllt. Nach 45 Minuten Durchleiten mit Stickstoffgas unter Rühren wurde der Reaktor auf 58 °C hochgeheizt und 40 g 2,2'-Azoisobuttersäurenitril (AIBN) hinzugegeben. Anschließend wurde das äußere Heizbad auf 75 °C erwärmt und die Reaktion konstant bei dieser Außentemperatur durchgeführt. Nach 1 h Reaktionszeit wurde wiederum 40 g AIBN hinzugegeben. Nach 5 h und 10 h wurde mit jeweils 15 kg Aceton/Isopropanol (85:15) verdünnt. Nach 6 und 8 h wurden jeweils 100 g Dicyclohexylperoxydicarbonat (Perkadox 16®, Fa. Akzo Nobel) gelöst in jeweils 800 g Aceton hinzugegeben. Die Reaktion wurde nach 24 h Reaktionszeit abgebrochen und auf Raumtemperatur abgekühlt.

Anschließend wurde mit 20 Gew.-% eines C5-C9 KW-Harzes der Firma VFT Rüttgers (TK 90 H), mit 2 Gew.-% eines Pthalsäureesters Palatinol™ AH (BASF AG) und 1 Gew.-% trifunktionellen Acrylats (SR 444, Fa. Cray Valley) in Lösung abgemischt und anschließend in der Wärme bei 120°C im Vakuum vom Lösemittel befreit.

### Polymer 2

Ein für radikalische Polymerisationen konventioneller 200 L-Reaktor wurde mit 72 kg 2-Ethylhexylacrylat, 8 kg Acrylsäure und 53,3 kg Aceton/Isopropanol (97:3) befüllt. Nach 45 Minuten Durchleiten mit Stickstoffgas unter Rühren wurde der Reaktor auf 58 °C hochgeheizt und 40 g 2,2'-Azoisobuttersäurenitril (AIBN) hinzugegeben. Anschließend wurde das äußere Heizbad auf 75 °C erwärmt und die Reaktion konstant bei dieser Außentemperatur durchgeführt. Nach 1 h Reaktionszeit wurde wiederum 40 g AIBN hinzugegeben. Nach 5 h und 10 h wurde mit jeweils 15 kg Aceton/Isopropanol (97:3) verdünnt. Nach 6 und 8 h wurden jeweils 100 g Dicyclohexylperoxydicarbonat (Perkadox 16^{®}, Fa. Akzo Nobel) gelöst in jeweils 800 g Aceton hinzugegeben. Die Reaktion wurde nach 24 h Reaktionszeit abgebrochen und auf Raumtemperatur abgekühlt. Anschließend wurde mit 0,4 Gew.-% Aluminium-(III)-acetylacetonat (gelöst als 10-%ige Lösung in Isopropanol) unter intensivem Rühren abgemischt. Die gesamte Lösung wird dann auf 25 Feststoffgehalt mit Aceton verdünnt und mit einem Kommarakel beschichet. Nach Trocknung bei 120°C für 10 Minuten erreicht man eine vollständige Vernetzung des Haftklebstoffs.

### Laminatklebstoff

Eine Mischung aus 5 g Acrylsäure und 95 g 2-Ethylhexylacrylat entgast und mit Stickstoff abgesättigt wurde in einen Polyethylenbeutel unter Sauerstoffausschluss gefüllt. Der PE-Beutel besitzt eine silikonisierte Innenschicht und ist von außen mit Aluminium beschichtet. Dann wurde der Reaktor mit einer Co60 Quelle mit 100 Krad/h und einer Gesamtdosis von 10 Krad bestrahlt. Der Syrup wurde mit 0,5 Gew.-% eines α -Hydroxyketons (Oligo[2-hydroxy-2-methyl-1-[4-(1-methylvinyl)phenyl]propanon]; Handelsname des eingesetzten Produktes: Esacure™ KIP 150; Fa. Lamberti) abgemischt und als Laminatklebstoff eingesetzt. Der Laminatklebstoff wird auf eine Trägerfolie über ein Rakel beschichtet. Kaschiert wurde dann mit einer zweiten Trägerfolie. Zur UV-Polymerisation und Härtung des Laminatklebstoffes wurde eine UV-Anlage der Fa. Eltosch eingesetzt. Die Anlage ist ausgerüstet mit einem Hg-undotierten UV-Strahler mit einer Wellenlänge von 250 nm und einer Intensität von 200 W/cm.

Die Kaschierverklebung wurde mit 10 m/min durch die Anlage gefahren, wobei zur Erhöhung der Bestrahlungsdosis je Muster in mehreren Durchgängen bestrahlt wurden. Für den Aufbau von mehreren Trägerfolienschichten kann jeweils auf die oberste Trägerfolienschicht noch einmal eine Schicht Laminatklebstoff aufgebracht werden, eine neue Schicht Trägerfolie zukaschiert werden und dann wiederum mit UV-Licht zu härten und polymerisieren.

Die Scherstandzeit des Laminatklebstoffs 1 nach Test D betrug 6.800 min (Adhäsions/Kohäsions-Mischbruch).

### Herstellung der doppelseitigen Haftklebebänder

Das Polymer 2 wurde aus Lösung über einen Streichbalken auf ein mit 1,5 g/m² Silikonbeschichtetes (Polydimethylsiloxan) Glassine-Trennpapier beschichtet. Anschließend wurden das Polymere in einem Trockenkanal mit max. 120°C und einer Bahngeschwindigkeit von 10 m/min getrocknet.

### Folien:

Folgende Rohfolien wurden eingesetzt:
Mitsubishi RNK12 : Polyethylenterephthalatfolie mit 12 µm Dicke
Mitsubishi RNK23 : Polyethylenterephthalatfolie mit 23 µm Dicke
Mitsubishi RNK50 : Polyethylenterephthalatfolie mit 50 µm Dicke
Mitsubishi RN 100: Polyethylenterephthalatfolie mit 100 µm Dicke
Mitsubishi RN 250: Polyethylenterephthalatfolie mit 250 µm Dicke

### Folienlaminate:

Folienlaminat 1
   2 Mitsubishi Folien RNK 12 wurden Corona vorbehandelt und mit 5 g/m² des Laminatklebstoffes 1 verbunden. Die Gesamtdicke des Verbundes beträgt 29 µm.
Folienlaminat 2
   2 Mitsubishi Folien RNK 23 wurden Corona vorbehandelt und mit 5 g/m² des Laminatklebstoffes verbunden. Die Gesamtdicke des Verbundes beträgt 50 µm
Folienlaminat 3
   2 Mitsubishi Folien RNK 50 wurden Corona vorbehandelt und mit 5 g/m² des Laminatklebstoffes verbunden. Die Gesamtdicke des Verbundes beträgt 105 µm.
Folienlaminat 4
   3 Mitsubishi Folien RNK 23 wurden Corona vorbehandelt und mit jeweils 15 g/m² des Laminatklebstoffes verbunden. Die Gesamtdicke des Verbundes beträgt 100 µm.
Folienlaminat 5
   3 Mitsubishi Folien RNK 50 wurden Corona vorbehandelt und mit jeweils 50 g/m² Masseauftrag des Polymer 1 verbunden. Anschließend wurde mit einer Beschleunigungsspannung von 180 kV und einer Streudosis von 60 kGy gehärtet. Die Gesamtdicke des Verbundes beträgt 250 µm.

### Untersuchte Proben:

### Beispiel 1

Folienlaminat 1 wurde beidseitig mit jeweils 50 g/m² Polymer 2 beschichtet.

### Beispiel 2

Folienlaminat 2 wurde beidseitig mit jeweils 50 g/m² Polymer 2 beschichtet.

### Beispiel 3

Folienlaminat 3 wurde beidseitig mit jeweils 50 g/m² Polymer 2 beschichtet.

### Beispiel 4

Folienlaminat 4 wurde beidseitig mit jeweils 50 g/m² Polymer 2 beschichtet.

### Beispiel 5

Folienlaminat 5 wurde beidseitig mit jeweils 50 g/m² Polymer 2 beschichtet.

### Referenzbeispiel 1

Die Mitsubishi Folie RNK 23 wurde beidseitig mit jeweils 50 g/m² Polymer 2 beschichtet.

### Referenzbeispiel 2

Die Mitsubishi Folie RNK 50 wurde beidseitig mit jeweils 50 g/m² Polymer 2 beschichtet.

### Referenzbeispiel 3

Die Mitsubishi Folie RN 100 wurde beidseitig mit jeweils 50 g/m² Polymer 2 beschichtet.

### Referenzbeispiel 4

Die Mitsubishi Folie RN 250 wurde beidseitig mit jeweils 50 g/m² Polymer 2 beschichtet.

### Referenzbeispiel 5

Handelsprodukt tesa 62932: Doppelseitiges Haftklebeband mit Polyethylen (PE-)-Schaumträger und 2 x 75 g/m² Masseauftrag einer modifizierten Acrylatklebmasse, deren Klebkraft unter gleichen Bedingungen im Wesentlichen identisch ist mit der Klebkraft des Polymers 2. Die Gesamtdicke des Produktes betrug 480 µm.

### Resultate

In einem ersten Schritt wurde die Verklebungsfestigkeiten der Beispiele und der Referenzbeispiele bestimmt. Der Ergebnisse sind in der folgenden Tabelle 1 dargestellt.

**Tabelle 1. Übersicht der Klebkräfte (Test A).**

| **Beispiele** | **Dicke des doppelseitigen Klebebandes** | **Klebkraft (Test A)** |
|---|---|---|
| 1 (nicht erfindungsgemäß) | 129 µm | 6,0 N/cm |
| 2 (nicht erfindungsgemäß) | 150 µm | 6,6 N/cm |
| 3 | 205 µm | 7,1 N/cm |
| 4 | 198 µm | 7,2 N/cm |
| 5 | 352 µm | 5,8 N/cm |
| Referenzbeispiel 1 | 123 µm | 6,3 N/cm |
| Referenzbeispiel 2 | 150 mm | 6,7 N/cm |
| Referenzbeispiel 3 | 200 µm | 5,2 N/cm |
| Referenzbeispiel 4 | 480 µm | 3,7 N/cm |

Der Tabelle 1 ist zu entnehmen, dass die Beispiele ähnliche Klebkräfte aufweisen wie die Referenzbeispiele mit vergleichbarer Schichtdicke. Die Beispiele 4 und insbesondere 5 zeigen dagegen deutlich höhere Klebkräfte, da bei den Referenzbeispielen 3 und 4 im 180° Klebkrafttest bereits die Klebkräfte durch die deutlich höhere Biegesteifigkeit des Trägers sinken, die Haftklebmasse dann vom Substrat abplatzt und die gemessenen Werte eher gering sind.

Zur weiteren Charakterisierung wurde von allen Beispielen die Biegesteifigkeit bestimmt. Dies soll die gestiegene Flexibilität des Trägers der erfindungsgemäßen Beispiele 1 bis 5 zeigen. Die Ergebnisse sind in der Tabelle 2 zusammengefasst.

**Tabelle 2. Übersicht der Biegesteifigkeit(Test B).**

| **Beispiele** | **Biegesteifigkeit (Test B)** |
|---|---|
| 1 (nicht erfindungsgemäß) | 0,02 mNm |
| 2 (nicht erfindungsgemäß) | 0,04 mNm |
| 3 | 0,18 mNm |
| 4 | 0,22 mNm |
| 5 | 1,34 mNm |
| Referenzbeispiel 1 | 0,02 mNm |
| Referenzbeispiel 2 | 0,05 mNm |
| Referenzbeispiel 3 | 0,39 mNm |
| Referenzbeispiel 4 | 23,9 mNm |

Der Tabelle 2 ist zu entnehmen, dass die erfindungsgemäßen Beispiele 3, 4 und 5 eine deutlich geringere Biegesteifigkeit im Vergleich zu den gleichdicken Referenzbeispielen aufweisen. Die Unterschiede sind für die dreischichtigen Beispiele 4 und 5 noch deutlich stärker ausgeprägt, da hier der mehr Laminierklebstoff bzw. Haftklebmasse eingesetzt wird und somit ein höherer flexibler Anteil im Träger erhalten bleibt. Beispiel 1 und Referenzbeispiel 1 sowie Beispiel 2 und Referenzbeispiel 2 unterscheiden sich kaum, da hier die Werte auf Grund des dünnen Trägerproduktdesigns auf einem sehr niedrigen Niveau liegen.

Zur Überprüfung der praktischen Relevanz wurde weiterhin der Kugelfalltest C durchgeführt. Dieser Test simuliert die Situation, dass z.B. ein Mobilfunktelefon herunterfällt und sich die einzelnen Bauteile durch den Schock nicht lösen sollten. Der Schock wird durch den Kugelfalltest simuliert. In Tabelle 3 sind die Ergebnisse des Kugelfalltests dargestellt.

**Tabelle 3. Übersicht des Kugelfalltests (Test C).**

| **Beispiele** | **Kugelfalltest (Test C) / Fallhöhe in [cm]** |
|---|---|
| 1 (nicht erfindungsgemäß) | 80 |
| 2 (nicht erfindungsgemäß) | 80 |
| 3 | 70 |
| 4 | 90 |
| 5 | 110 |
| Referenzbeispiel 1 | 60 |
| Referenzbeispiel 2 | 60 |
| Referenzbeispiel 3 | 50 |
| Referenzbeispiel 4 | 50 |

Der Tabelle 3 ist zu entnehmen, dass generell die Referenzbeispiele keine großen Schwankungen in der Fallhöhe aufweisen. Dies liegt in dem identischen Masseauftrag begründet. Die erfindungsgemäßen Beispiele zeigen dagegen einen Einfluss, da hier insbesondere der Laminatkleber bzw. die Haftklebmasse hilft, den Schock mit zu absorbieren. Daher weisen die erfindungsgemäßen Beispiele alle eine höhere Fallhöhe auf.

Weiterhin sollte geklärt werden, wie dimensionsstabil die Beispiele sind. Daher wurde 2 x 2 cm große Probenkörper ausgeschnitten, die Dicke gemessen, dann mit einer Presse ein Druck von 100 N/cm² für 10 Sekunden aufgebracht und anschließend wieder die Dicke gemessen. Die Messwerte sind in der folgenden Tabelle 4 dargestellt.

**Tabelle 4. Schichtdicke vor und nach Druckapplizierung).**

| **Beispiele** | **Dicke in [µm] vor Druckbelastung** | **Dicke in [µm] nach Druckbelastung** |
|---|---|---|
| 1 (nicht erfindungsgemäß) | 129 | 126 |
| 2 (nicht erfindungsgemäß) | 150 | 147 |
| 3 | 205 | 202 |
| 4 | 198 | 195 |
| 5 | 352 | 347 |
| Referenzbeispiel 1 | 124 | 122 |
| Referenzbeispiel 2 | 148 | 146 |
| Referenzbeispiel 3 | 202 | 200 |
| Referenzbeispiel 4 | 347 | 344 |
| Referenzbeispiel 5 | 480 | 431 |

Die Messwerte belegen, dass sowohl die Beispiele 1 bis 5 als auch die Referenzbeispiele 1 - 4 eine sehr gute Dickenkonstanz aufweisen und nur äußerst wenig Dicke durch Druck verlieren. Beim Referenzbeispiel 5 tritt dagegen eine deutlich Dickenänderung auf. Durch den applizierten Druck wird der PE-Schaum zusammengedrückt und kann sich dann nicht mehr vollständig regenerieren. Dies ist ein deutlicher Vorteil der erfindungsgemäßen Beispiele, da Sie Flexibilität mit hoher Dickenkonstanz vereinigen.

Bei der Herstellung der 2 x 2 cm großen Probekörper im Flachbettverfahren zeigte sich weiterhin, dass die Beispiele 1 bis 5 ohne Probleme stanzen ließen. Die ist gegenüber Haftklebebändern mit Schaumstoffträger ein weiterer wesentlicher Vorteil, da diese sehr flexibel sind und nur sehr schlecht gestanzt werden können bzw. als Stanzlinge handhabbar sind.

## Patentansprüche

1. Klebeband umfassend mindestens eine erste Schicht einer Klebmasse ("erste H H äußere Klebmasse") sowie eine Trägerschicht, wobei die Trägerschicht mindestens eine Dicke von 0,1 mm aufweist, wobei
die Trägerschicht ihrerseits als ein Laminat aus zumindest zwei Folienschichten aufgebaut ist, die mit einer oder mehreren Klebmassenschichten ("Laminatklebmassenschichten") miteinander verbunden sind,
**dadurch gekennzeichnet, dass**
alle Folienschichten aus demselben Folienmaterial bestehen.

2. Klebeband nach Anspruch 1, **dadurch gekennzeichnet, dass**
die Trägerschicht zumindest drei Folienschichten umfasst, die mit Klebmassenschichten miteinander verbunden sind.

3. Klebeband nach einem der vorangehenden Ansprüche, **dadurch gekennzeichnet, dass**
eine, mehrere oder alle der Folienschichten eine Schichtdicke im Bereich von 4 bis 100 µm, insbesondere im Bereich von 12 bis 50 µm, aufweisen.

4. Klebeband nach einem der vorangehenden Ansprüche, **dadurch gekennzeichnet, dass**
eine, mehrere oder alle der die Folienschichten verbindenden Klebmassenschichten eine Schichtdicke im Bereich von 10 bis 100 µm aufweisen.

5. Klebeband nach einem der vorangehenden Ansprüche, **dadurch gekennzeichnet, dass**
als Klebmasse für eine, mehrere oder alle die Folienschichten verbindenden Klebmassenschichten Haftklebmassen und/oder Kaschierklebmassen verwendet werden.

6. Klebeband nach einem der vorangehenden Ansprüche, **gekennzeichnet durch** eine Gesamtdicke im Bereich von 120 bis 450 µm.

7. Klebeband nach einem der vorangehenden Ansprüche, **dadurch gekennzeichnet, dass**
das Folienlaminat der Trägerschicht eine geringere Biegesteifigkeit aufweist als eine gleich dimensionierte Folienschicht, die aus demselben Folienmaterial wie die Folienschichten des Laminats besteht (breitenbezogene Biegesteifigkeit S nach DIN 53121:2008-10; Nr. 5.1. Zweipunkt-Verfahren; mit der Maßgabe, dass statt Papier, Karton oder Pappe das Folienlaminat bzw. eine wie vorstehend beschriebene Folienschicht entsprechend vermessen wird).

8. Klebeband nach einem der vorangehenden Ansprüche, **dadurch gekennzeichnet, dass**
auf beiden Seiten der Trägerschicht eine Haftklebmassenschicht vorgesehen ist.

9. Verwendung eines Klebebandes nach einem der vorangehenden Ansprüche zur Verklebung auf gebogenen Oberflächen.

10. Verwendung eines Klebebandes nach einem der Ansprüche 1 bis 8 zur Verklebung von flexiblen Druckplatten auf Druckzylinder oder Druckhülsen.

11. Verwendung eines Klebebandes nach einem der vorangehenden Ansprüche zur Verklebung in elektronischen Geräten oder Bauteilen, insbesondere von Bauteilen für Membranschalteinheiten.

## Claims

1. Adhesive tape comprising at least one first layer of an adhesive ("first outer adhesive") and also a carrier layer, the carrier layer having at least a thickness of 0.1 mm, and
the carrier layer being constructed in turn as a laminate comprising at least two film layers joined to one another by one or more layers of adhesive ("laminate adhesive layers"), **characterized in that** all of the film layers consist of the same film material.

2. Adhesive tape according to Claim 1, **characterized in that** the carrier layer comprises at least three film layers joined to one another by layers of adhesive.

3. Adhesive tape according to either of the preceding claims, **characterized in that** one, two or more or all of the film layers have a layer thickness in the range from 4 to 100 µm, more particularly in the range from 12 to 50 µm.

4. Adhesive tape according to any of the preceding claims, **characterized in that** one, two or more or all of the layers of adhesive joining the film layers have a layer thickness in the range from 10 to 100 µm.

5. Adhesive tape according to any of the preceding claims, **characterized in that** pressure-sensitive adhesives and/or laminating adhesives are used as adhesive for one, two or more or all of the layers of adhesive joining the film layers.

6. Adhesive tape according to any of the preceding claims, **characterized by** an overall thickness in the range from 120 to 450 µm.

7. Adhesive tape according to any of the preceding claims, **characterized in that** the film laminate of the carrier layer has a lower flexural stiffness than a same-sized film layer consisting of the same film material as the film layers of the laminate (width-based flexural stiffness S to DIN 53121:2D08-10; No. 5.1. two-point method; with the proviso that rather than paper, card or board, the film laminate or a film layer as described above is measured accordingly).

8. Adhesive tape according to any of the preceding claims, **characterized in that** a layer of pressure-sensitive adhesive is provided on both sides of the carrier layer.

9. Use of an adhesive tape according to any of the preceding claims for bonding to curved surfaces.

10. Use of an adhesive tape according to any of Claims 1 to 8 for bonding flexible printing plates to printing cylinders or printing sleeves.

11. Use of an adhesive tape according to any of the' preceding claims for bonding in electronic devices or components, more particularly of components for membrane switching units.

## Revendications

1. Ruban adhésif comportant au moins une première couche de pâte adhésive ("première pâte adhésive extérieure") ainsi qu'une couche de support, la couche de support présentant une épaisseur d'au moins 0,1 mm
la couche de support étant elle-même formée d'un stratifié d'au moins deux couches de feuilles reliées l'une à l'autre par une ou plusieurs couches de pâte adhésive ("couches de pâte adhésive du stratifié"), **caractérisé en ce que**
toutes les couches de feuilles sont constituées du même matériau en feuille.

2. Ruban adhésif selon la revendication 1, **caractérisé en ce que** la couche de support comporte au moins trois couches de feuilles reliées les unes aux autres par des couches de pâte adhésive.

3. Ruban adhésif selon l'une des revendications précédentes, **caractérisé en ce qu'**une, plusieurs ou toutes les couches de feuille présentent une épaisseur de l'ordre de 4 à 100 µm et en particulier de l'ordre de 12 à 50 µm.

4. Ruban adhésif selon l'une des revendications précédentes, **caractérisé en ce qu'**une, plusieurs ou toutes les couches de feuille présentent des couches de pâte adhésive de liaison dont l'épaisseur est de l'ordre de 10 à 100 µm.

5. Ruban adhésif selon l'une des revendications précédentes, **caractérisé en ce que** des pâtes adhésives et/ou des pâtes adhésives de contre-collage sont utilisées pour une, plusieurs ou toutes les couches de pâte adhésive qui relient les couches de feuille.

6. Ruban adhésif selon l'une des revendications précédentes, **caractérisé par** une épaisseur totale de l'ordre de 120 à 450 µm.

7. Ruban adhésif selon l'une des revendications précédentes, **caractérisé en ce que** le stratifié de feuilles de la couche de support présente une moindre rigidité en flexion qu'une couche de feuille de même dimension, constituée du même matériau en feuille que les couches de feuille du stratifié (rigidité en flexion S en largeur selon la norme DIN 53121:2008-10; nr. 5.1, procédé à deux points; avec la condition qu'au lieu de papier, de carton, le stratifié de feuilles ou une couche de feuilles telle que décrite plus haut est mesurée de manière appropriée).

8. Ruban adhésif selon l'une des revendications précédentes, **caractérisé en ce qu'**une couche de pâte adhésive est prévue sur les deux faces de la couche de support.

9. Utilisation d'un ruban adhésif selon l'une des revendications précédentes pour le collage sur des surfaces cintrées.

10. Utilisation d'un ruban adhésif selon l'une des revendications 1 à 8 pour le collage de plaques d'impression flexibles sur des cylindres d'impression ou des manchons d'impression.

11. Utilisation d'un ruban adhésif selon l'une des revendications précédentes dans des appareils ou des composants électroniques, en particulier des composants d'unités de commutation à membrane.
